(19) Europäisches Patentamt
European Patent Office
Office européen des brevets

(11) **EP 3 273 749 B1**

(12) **EUROPÄISCHE PATENTSCHRIFT**

(45) Veröffentlichungstag und Bekanntmachung des Hinweises auf die Patenterteilung:
**27.02.2019 Patentblatt 2019/09**

(51) Int Cl.:
*H05B 6/06* (2006.01)  *H05B 6/12* (2006.01)

(21) Anmeldenummer: **17179902.6**

(22) Anmeldetag: **06.07.2017**

(54) **VERFAHREN ZUM BETREIBEN EINER INDUKTIONSHEIZVORRICHTUNG FÜR EIN INDUKTIONSKOCHFELD**

METHOD FOR OPERATING AN INDUCTION HEATER FOR AN INDUCTION HOB

PROCÉDÉ DE FONCTIONNEMENT D'UN DISPOSITIF DE CHAUFFAGE PAR INDUCTION ET PLAQUE DE CUISSON À INDUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2016 AT 3422016**

(43) Veröffentlichungstag der Anmeldung:
**24.01.2018 Patentblatt 2018/04**

(73) Patentinhaber: **FLUXRON Solutions AG**
**8589 Sitterdorf (CH)**

(72) Erfinder:
• **Jäckle, Benno**
**9308 Lömmenschwil (CH)**

• **Alpiger, Markus**
**9535 Wilen b. Wil/TG (CH)**

(74) Vertreter: **Hofmann, Ralf U. et al**
**Hofmann & Fechner**
**Patentanwälte**
**Hörnlingerstrasse 3**
**Postfach 5**
**6830 Rankweil (AT)**

(56) Entgegenhaltungen:
**EP-A1- 1 978 786    DE-A1-102010 002 655**

**Beschreibung**

Die Erfindung bezieht sich auf ein Verfahren zum Betreiben einer Induktionsheizvorrichtung für ein Induktionskochfeld, mit einer Induktionsspule und einem Generator, der ein Leistungsteil, welches mit der Induktionsspule einen Schwingkreis bildet, und ein Steuerteil aufweist, wobei vom Steuerteil in Abhängigkeit von einer eingestellten Kochstufe eine Größe gesteuert oder geregelt wird, von der die Scheinleistung der Induktionsspule abhängt.

Bei einem Induktionskochfeld befindet sich unterhalb einer Kochfeldplatte, üblicherweise aus Glaskeramik, eine Induktionsheizvorrichtung. Eine Induktionsspule der Induktionsheizvorrichtung erzeugt ein Induktionsfeld in Form eines magnetischen Wechselfeldes, welches in einem auf der Kochfeldplatte angeordneten Topf durch Induktion Wirbelströme erzeugt, die den Topf durch dessen ohmschen Widerstand aufheizen. Übliche Frequenzen liegen im Bereich von 20 kHz bis 50 kHz.

Zum Ansteuern der Induktionsspule dient ein Generator, auch als Umrichter bezeichnet, der ein Leistungsteil und ein Steuerteil umfasst. Das Leistungsteil bildet mit der Induktionsspule einen Schwingkreis. Das Steuerteil dient zum Steuern und/oder Regeln des Leistungsteils.

Üblicherweise erfolgt vom Steuerteil in Abhängigkeit von der vom Benutzer eingestellten Kochstufe eine Einstellung der Scheinleistung, mit welcher die Induktionsspule betrieben wird, indem der Maximalwert des vom Ausgang des Leistungsteils ausgegebenen Stroms (im Falle der Ausbildung eines Serienschwingkreises) oder der am Ausgang des Leistungsteils anliegenden Spannung (im Falle der Ausbildung des Schwingkreises als Parallelschwingkreis) geregelt wird. Eine Verstellung des Maximalwerts des vom Ausgang des Leistungsteils ausgegebenen Stroms oder der am Ausgang des Leistungsteils anliegenden Spannung kann dadurch erfolgen, dass die Pulslänge eines Pulsgenerators vom Steuerteil geändert wird. Eine andere bekannte Möglichkeit besteht darin, dass die Frequenz des Pulsgenerators vom Steuerteil geändert wird. Anstelle der Heranziehung des Maximalwerts des vom Ausgang des Leistungsteils ausgegebenen Stroms oder der am Ausgang des Leistungsteils anliegenden Spannung als Regelgröße ist es auch bekannt, direkt eine Regelung der Pulsdauer oder der Frequenz des Pulsgenerators durchzuführen. Von der Pulsdauer bzw. Frequenz hängt der Maximalwert des vom Ausgang des Leistungsteils ausgegebenen Stroms oder der am Ausgang des Leistungsteils anliegenden Spannung und damit in weiterer Folge die Scheinleistung der Induktionsspule ab.

Aus der EP 2 087 770 B1 ist ein Verfahren zum Betreiben einer Induktionsheizvorrichtung bekannt, bei welchem die Heizleistung der Induktionsspule allein dadurch eingestellt wird, dass die Position eines Kochgeschirrs auf dem Induktionskochfeld verändert wird. Bei zentrierter Anordnung des Kochgeschirrs auf der Induktionsspuele wird die Induktionsspule auf die höchste Heizleistung eingestellt. Wird das Kochgeschirr mehr und mehr vom Zentrum der Induktionsspule weggezogen, so wird die Heizleistung fortlaufend verringert. Bei dem aus dieser Schrift bekannten Verfahren wird hierzu ein Ist-Wert ermittelt, der von der Position des Kochgeschirrs auf der Spule abhängig ist. Dieser Ist-Wert kann beispielsweise das Verhältnis zwischen dem durch die Induktionsspule fließenden Strom und dem der Induktionsheizvorrichtung zugeführten Netzstrom sein. Gemäß dieser Schrift ist dieses Verhältnis umso größer, je weiter der Topf vom Zentrum der Spule weggezogen ist. Andere Größen, die gemäß dieser Schrift als Ist-Wert herangezogen werden können, sind die Phasenverschiebung des Induktionsstroms, der Netzstrom, das Verhältnis von Netzspannung zu Wirkstrom oder die Leistung (=Wirkleistung).

Der so ermittelte Ist-Wert wird mit einem vorgegebenen Soll-Wert unter Bildung einer Abweichung verglichen. Es wird hierzu eine Soll-Kurve vorgegeben. Bei einer Abweichung des Ist-Werts vom Soll-Wert wird die Leistung der Spule vom Steuerteil derart verändert, dass sich der Ist-Wert auf den Soll-Wert einstellt. Die Einstellung der Leistung der Spule erfolgt hierbei über eine Änderung einer Pulsdauer oder Pulsfrequenz eines Pulsgenerators.

Aus der US 2013/0284723 A1 geht ein Verfahren zum Betreiben einer Induktionsheizvorrichtung hervor, wobei ebenfalls das Verhältnis zwischen dem durch die Induktionsspule fließenden Strom und dem Netzstrom ermittelt wird, welcher der Induktionsheizvorrichtung zugeführt wird. Dieses Verhältnis wird mit der eingestellten Kochstufe verglichen und die der Induktionsspule zugeführte Leistung wird in Abhängigkeit von diesem Vergleich limitiert. Es soll dadurch das Leistungsteil gegen Überhitzung für den Fall des Einsatzes eines minderwertigen Kochgeschirrs oder einer unzureichenden Positionierung des Kochgeschirrs oberhalb der Induktionsspule geschützt werden.

Die EP 1 414 276 A1 beschreibt ein Verfahren, um ein durch das Magnetfeld der Induktionsspule bewirktes Anheben und Verrücken eines Topfes, speziell im Fall von leichten Töpfen, beispielsweise aus Aluminium, zu verhindern. Es wird hierzu der zeitliche Verlauf des aus dem Netz bezogenen Eingangsstroms oder der Eingangsleistung erfasst. Bei einem Anheben oder einer Verschiebung des aufzuheizenden Topfes kommt es zu einer markanten Änderung dieses Verlaufs, aus welcher auf ein solches Anheben oder Verrücken geschlossen wird. Um ein weiteres Anheben oder Verrücken zu verhindern, wird dann die Leistung der Induktionsspule verringert. Ein ähnliches Verfahren geht auch aus der JP 2009-272152 A hervor. Weitere Verfahren zum Betreiben einer Induktionsheizvorrichtung für ein Induktionskochfeld nach dem Stand der Technik sind aus der EP-A1-1 978 786 und der DE 10 2010 002655 A1 bekannt.

Induktionskochfelder weisen verschiedene Vorteile auf, insbesondere die Möglichkeit der sehr raschen Erhitzung des Kochgeschirrs. Als Nachteil bei Induktionskochfeldern wird die Emission von elektromagnetischen Feldern angesehen, hinsichtlich von denen teilweise gesundheitliche Bedenken bestehen. Aufgabe der Erfindung ist es, mögliche elektromagnetische Emissionen eines Induktionskochfeldes zu verringern. Erfindungsgemäß gelingt dies durch ein Verfahren mit den Merkmalen des Anspruchs 1.

Beim Verfahren gemäß der Erfindung ist vorgesehen, dass vom Steuerteil ein Leistungsfaktorwert $\lambda'$ bestimmt wird, der dem Leistungsfaktor $\lambda$ der Induktionsspule zumindest näherungsweise entspricht oder zu diesem zumindest näherungsweise proportional ist. Der Leistungsfaktor ist definiert durch den Betrag der Wirkleistung geteilt durch die Scheinleistung. Die Größe des Leistungsfaktors hängt vom Grad der Überdeckung der Induktionsspule durch das Kochgefäß ab. So kann der Leistungsfaktor bei einer vollständigen Überdeckung der Induktionsspule durch das Kochgefäß im Bereich von 0,7 liegen. Bei einer nur teilweisen Überdeckung der Induktionsspule ist der Leistungsfaktor entsprechend niedriger. Beim erfindungsgemäßen Verfahren wird bei einem kleineren ermittelten Leistungsfaktorwert $\lambda'$ die Größe, von der die Scheinleistung der Induktionsspule abhängt, so eingestellt, dass die Scheinleistung der Induktionsspule kleiner ist als bei einem größeren Leistungsfaktorwert. Es kann dadurch bei einer Verringerung der Überdeckung der Induktionsspule durch das Kochgefäß ein Ansteigen der Blindleistung und damit der elektromagnetischen Emission zumindest verringert oder auch ganz ausgeschlossen werden. Die Induktionsspule kann also so angesteuert werden, dass bei einer Verringerung der Überdeckung der Induktionsspule durch das Kochgefäß die Blindleistung konstant bleibt oder sich verringert. Insbesondere kann damit die Blindleistung und damit die Emission von elektromagnetischen Feldern unter einem vorgegebenen Grenzwert gehalten werden. Das erfindungsgemäße Verfahren ermöglicht hierbei eine sehr stabile und zuverlässige Regelung bzw. Steuerung. Vorteilhafterweise kann beim erfindungsgemäßen Verfahren hierbei mit nur einem Stromsensor das Auslangen gefunden werden. Mit diesem kann der vom Leistungsteil ausgegebene Strom erfasst werden.

Um den Leistungsfaktorwert zu bestimmen, kann ein der Wirkleistung der Induktionsspule zumindest näherungsweise entsprechender oder zu dieser zumindest näherungsweise proportionaler Wirkleistungswert bestimmt werden und im Weiteren ein der Scheinleistung der Induktionsspule zumindest näherungsweise entsprechender oder zu dieser zumindest näherungsweise proportionaler Scheinleistungswert bestimmt werden und der Betrag des Wirkleistungswertes durch den Scheinleistungswert dividiert werden.

Um den Wirkleistungswert zu bestimmen, kann vorteilhafterweise zu einer Mehrzahl von Bestimmungszeitpunkten, welche gleichmäßig verteilte Phasenlagen im periodischen Kurvenverlauf des vom Ausgang des Leistungsteils ausgegebenen Stroms (=Gesamtstrom) und im periodischen Kurvenverlauf der am Ausgang des Leistungsteils anliegenden Spannung (=Gesamtspannung) aufweisen, jeweils das Produkt der Momentanwerte des Stroms und der Spannung gebildet wird. Die so erhaltenen Produkte werden in der Folge addiert.

Die Bestimmungszeitpunkte ergeben sich hierbei günstigerweise durch eine Abtastung des Stroms und der Spannung mit einer Abtastfrequenz, welche geringer als die Frequenz des Schwingkreises ist. Zeitlich aufeinanderfolgende Bestimmungszeitpunkte, an welchen jeweils der Strom und die Spannung erfasst werden, liegen also in unterschiedlichen Perioden des Stroms und der Spannung, vorzugsweise in aufeinanderfolgenden Perioden, und weisen jeweils verschobene Phasenlagen in der jeweiligen Periode auf. Günstigerweise wird die Abtastfrequenz so gewählt, dass sich im periodischen Kurvenverlauf des Stroms und der Spannung zumindest 10, vorzugsweise zumindest 15, Bestimmungszeitpunkte mit unterschiedlichen Phasenlagen ergeben.

Durch die Abtastung des Stroms und der Spannung mit einer gegenüber der Frequenz des Schwingkreises verringerten Abtastfrequenz kann die Kurvenform des Stroms bzw. der Spannung auf eine niedrigere Frequenz heruntertransformiert werden, sodass die Bildung und Addition der Produkte der Momentanwerte des Stroms und der Spannung vereinfacht wird.

In einer modifizierten Ausführungsform der Erfindung könnte ein Wirkleistungswert dadurch bestimmt werden, dass die Kurvenverläufe für den Strom und die Spannung als Näherung sinusförmig angesehen werden. Es werden dann in den periodischen Kurvenverläufen die Maximalwerte des Stroms und der Spannung sowie die Phasenverschiebung zwischen dem Strom und der Spannung (z.B. bei ihren Maximalwerten) ermittelt. In der Folge wird das Produkt aus dem Maximalwert des Stroms, dem Maximalwert der Spannung und dem Kosinus der Phasenverschiebung zwischen dem Strom und der Spannung gebildet wird. Anstelle des Maximalwerts des Stroms und des Maximalwerts der Spannung könnten auch der Effektivwert des Stroms und der Effektivwert der Spannung herangezogen werden.

Der Scheinleistungswert kann günstigerweise durch Multiplikation des im periodischen Kurvenverlauf vorliegenden Maximalwerts des Stroms mit dem im periodischen Kurvenverlauf vorliegenden Maximalwert der Spannung bestimmt werden. Anstelle des Maximalwerts des Stroms und des Maximalwerts der Spannung könnten auch der Effektivwert des Stroms und der Effektivwert der Spannung herangezogen werden.

Weitere Vorteile und Einzelheiten der Erfindung werden im Folgenden anhand der beiliegenden Zeichnung erläutert. In dieser zeigen:

Fig. 1 eine schematische Blockdarstellung einer Induktionsheizvorrichtung gemäß der Erfindung mit einem Kochfeld und einem darauf abgestellten Topf;
Fig. 2 Pulse des Pulsgenerators des Steuerteils;
Fig. 3 zwei Perioden des daraus resultierenden Stroms am Ausgang des Leistungsteils (=Strom im Schwingkreis);

Fig. 4 eine vereinfachte Darstellung des Stroms im Schwingkreis für eine Vielzahl von Perioden zusammen mit der Abtastung mit der Abtastfrequenz;

Fig. 5 der sich ergebende heruntertransformierte Kurvenverlauf;

Fig. 6 Darstellungen einer Periode der heruntertransformierten Kurvenverläufe für den Strom und die Spannung zusammen mit den Bestimmungszeitpunkten, an denen die Abtastung erfolgt;

Fig. 7 ein Diagramm des Leistungsfaktorwerts λ' in Abhängigkeit vom prozentuellen Anteil der offenen (=nicht überdeckten) Spulenfläche;

Fig. 8 den eingestellten Wert des vom Ausgang des Leistungsteils ausgegebenen Stroms in Abhängigkeit vom prozentuellen Anteil der offenen Spulenfläche;

Fig. 9 und 10 die sich aus dem eingestellten Wert des Stroms ergebende Wirkleistung und Blindleistung in Abhängigkeit vom prozentuellen Anteil der offenen Spulenfläche.

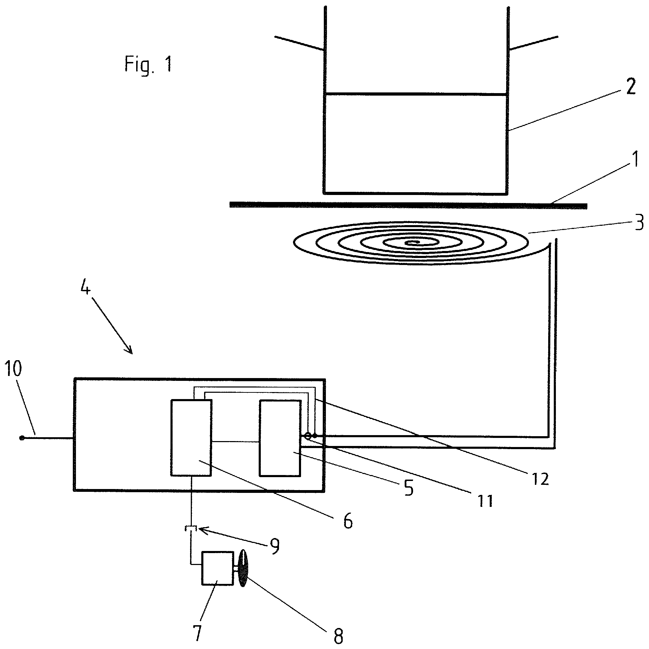

Die Induktionsheizvorrichtung dient zum Einbau unter einer Kochfeldplatte 1, bei welcher es sich insbesondere um eine Glaskeramikplatte handelt. In Fig. 1 ist schematisch ein auf der Kochfeldplatte 1 abgestellter Topf 2 dargestellt.

Die Induktionsheizvorrichtung umfasst eine Induktionsspule 3 und einen Generator 4 zum Betreiben der Induktionsspule 3.

Von der Induktionsspule 3 wird ein Induktionsfeld in Form eines magnetischen Wechselfeldes abgegeben, dessen Frequenz insbesondere im Bereich von 17 kHz bis 100 kHz liegen kann. Dieses Induktionsfeld erzeugt im auf der Kochfeldplatte 1 abgestellten metallischen Topf 2 durch Induktion Wirbelströme, die das Metall des Topfes durch dessen ohmschen Widerstand aufheizen.

Der Generator 4 umfasst ein Leistungsteil 5. Dieses bildet zusammen mit der Induktionsspule 3 in bekannter Weise einen Schwingkreis, insbesondere einen Serienschwingkreis oder einen Parallelschwingkreis. Zum Steuern und/oder Regeln des Leistungsteils 5 dient ein Steuerteil 6. An dieses ist eine Bedieneinheit 7 angeschlossen, mittels der vom Benutzer die Induktionsheizvorrichtung bedient werden kann. Insbesondere kann vom Benutzer eine Kochstufe eingestellt werden, von der die Scheinleistung abhängt, mit welcher die Induktionsspule betrieben wird. Hierzu weist die Bedieneinheit 7 mindestens ein Bedienelement 8 auf, beispielsweise einen Stellknebel.

Die Bedieneinheit 7 kann mit dem Steuerteil 6 über eine in Fig. 1 nur schematisch dargestellte elektrische Steckverbindung 9 verbunden sein.

In Fig. 1 ist weiters ein Kabel 10 zur Stromversorgung der Induktionsheizvorrichtung angedeutet.

Vom Ausgang des Leistungsteils 5 wird ein Strom (=Gesamtstrom) ausgegeben, der durch die Induktionsspule 3 fließt. Am Ausgang des Leistungsteils 5 liegt eine Spannung (=Gesamtspannung) an, die an der Induktionsspule 3 anliegt.

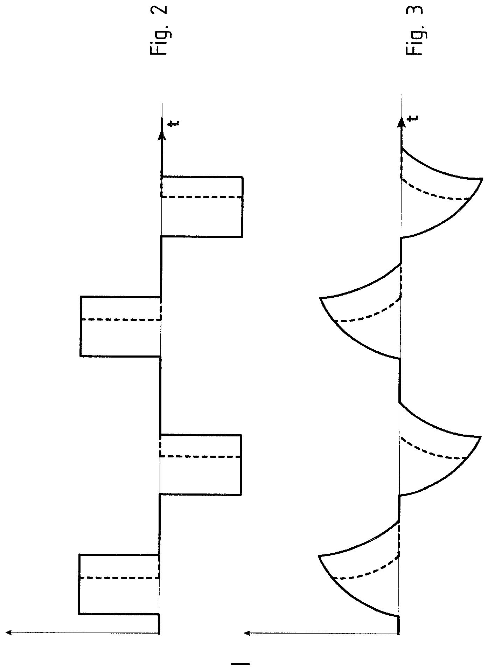

Im Ausführungsbeispiel regelt das Steuerteil in Abhängigkeit von der am Bedienelement 8 eingestellten Kochstufe den Maximalwert des vom Ausgang des Leistungsteils ausgegebenen Stroms (=Gesamtstroms). Hierzu kann in bekannter Weise vorgesehen sein, dass das Steuerteil 6 die Länge von in Fig. 2 dargestellten Pulsen (z.B. Spannungspulsen) eines Pulsgenerators des Steuerteils entsprechend einstellt. Eine erste Pulslänge ist in Fig. 2 als durchgezogene Linie dargestellt, eine zweite Pulslänge als gestrichelte Linie angedeutet. Mit diesen Pulsen mit der jeweils eingestellten Pulslänge wird das Leistungsteil 5 angesteuert und es resultiert hieraus ein unterschiedlicher Maximalwert des vom Leistungsteil 5 ausgegebenen Stroms I, vgl. Fig. 3. Die durchgezogene Linie des Stroms ergibt sich aus der Ansteuerung mit den in Fig. 2 in durchgezogener Linie dargestellten Pulsen, der durch die gestrichelte Linie dargestellte Verlauf des Stroms ergibt sich aus der Ansteuerung mit den in Fig. 2 in gestrichelter Linie angedeuteten Pulsen.

Im Ausführungsbeispiel bildet das Leistungsteil 5 mit der Induktionsspule 3 einen Serienresonanzkreis. Insbesondere weist das Leistungsteil 5 hierzu eine Halbbrückenschaltung auf, über welche die Induktionsspule 3 an das Leistungsteil 5 angebunden ist.

Die Frequenz der vom Pulsgenerator ausgegebenen Pulse entsprechend Fig. 2 entspricht der Frequenz des durch den Schwingkreis fließenden Stromes (Fig. 3) und der Frequenz der am Ausgang des Leistungsteils 5 anliegenden Spannung (=Gesamtspannung). Die am Ausgang des Leistungsteils 5 anliegende Spannung liegt also an der Induktionsspule an. Diese Schwingkreisfrequenz kann beispielsweise 20 kHz betragen. Ein anderer Wert, insbesondere im bereits genannten Bereich von 17 kHz bis 100 kHz, ist ebenfalls möglich.

Der Einsatz von Serienschwingkreisen für die Induktionsspule einer Induktionsheizvorrichtung, insbesondere die Anbindung der Induktionsspule über eine Halbbrückenschaltung, ist bekannt und üblich und muss an dieser Stelle nicht weiter erläutert werden. Ebenso ist es bekannt und üblich, zur Beeinflussung der Scheinleistung der Induktionsspule den Maximalwert des vom Leistungsteil ausgegebenen Stroms zu regeln.

Anstelle eines Serienschwingkreises könnte auch ein bei Induktionsheizvorrichtungen ebenfalls bekannter Parallelschwingkreis eingesetzt werden.

Anstelle einer Regelung des vom Leistungsteil abgegebenen Stroms könnte auch eine Regelung der am Ausgang des Leistungsteils anliegenden Spannung durchgeführt werden, um die Scheinleistung der Induktionsspule zu beeinflussen, was insbesondere im Falle des Einsatzes eines Parallelschwingkreises zweckmäßig wäre und ebenfalls bekannt ist.

Anstelle einer Regelung ("closed loop") des vom Ausgang des Leistungsteils ausgegebenen Stroms oder der am Ausgang des Leistungsteils anliegenden Spannung könnte auch lediglich eine Steuerung dieses Stroms oder dieser Spannung durchgeführt werden.

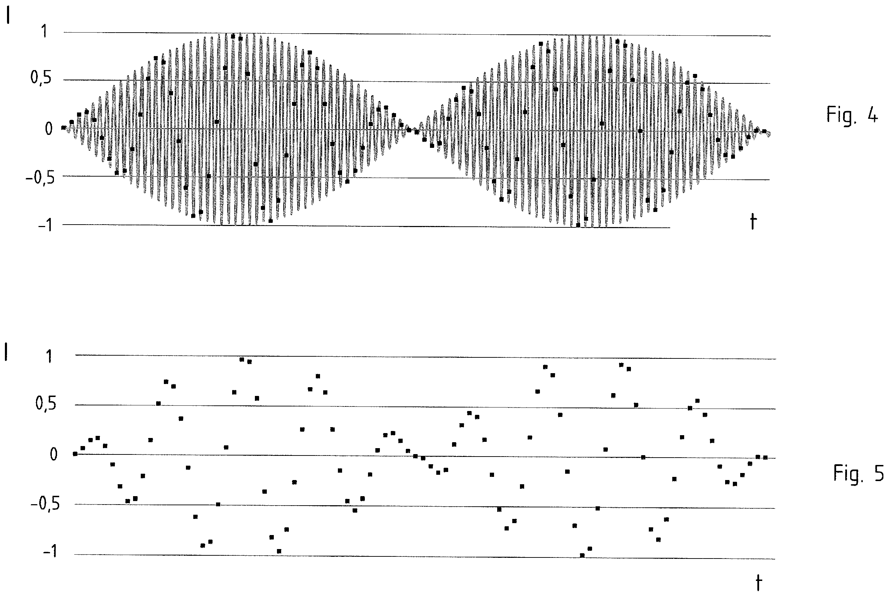

Fig. 4 zeigt den zeitlichen Verlauf des Stromes im Schwingkreis (=Ausgangsstrom des Leistungsteils) über eine größere Zahl von Schwingungen. Der periodische Verlauf des Stromes ist hierbei überlagert vom "100 Hz-Ripple". Dieser resultiert aus der Zweiweg-Gleichrichtung der Netzspannung, welche eine Frequenz von 50 Hz aufweist.

Der zeitliche Verlauf des Stroms ist in Fig. 4 mit einer Form dargestellt, wie sie sich annähernd ergeben würde, wenn die Pulse des Pulsgenerators auf ihre maximale Länge eingestellt werden, bei welcher sie unmittelbar aneinander anschließen. Es ergibt sich dann ein weitgehend sinusförmiger Verlauf des Stroms im Schwingkreis.

In Fig. 4 sind der Übersichtlichkeit halber nur 50 Perioden (Schwingungen) des Stroms pro Periode des 100 Hz-Ripples dargestellt, welche 10 ms beträgt. Bei einer Schwingkreisfrequenz von 20 kHz wären es tatsächlich 200 Perioden.

In der Folge wird die Bestimmung eines Leistungsfaktorwerts λ' beschrieben, der dem Leistungsfaktor λ der Induktionsspule zumindest näherungsweise entspricht oder zum Leistungsfaktor λ der Induktionsspule zumindest näherungsweise proportional ist. Hierzu wird zunächst ein Wirkleistungswert P' bestimmt, der der Wirkleistung P der Induktionsspule zumindest näherungsweise entspricht oder zur Wirkleistung P der Induktionsspule zumindest näherungsweise proportional ist.

Vom Steuerteil 6 werden Momentanwerte des vom Leistungsteil ausgegebenen Stroms I und der am Ausgang des Leistungsteils 5 anliegenden Spannung U erfasst. In Fig. 1 sind hierzu ein Stromsensor 11 zur Erfassung des Stroms und eine Leitung 12 zur Erfassung der Spannung angedeutet. Die Erfassung der Momentanwerte des Stroms und der Spannung wird zu gleichmäßig voneinander beabstandeten Bestimmungszeitpunkten durchgeführt. Die Abstände zwischen den Bestimmungszeitpunkten sind hierbei etwas größer als die Periodendauer des Stroms und der Spannung, vorzugsweise um weniger als 10%, besonders bevorzugt um weniger als 6% größer.

Die Werte für den Strom, die sich zu den Bestimmungszeitpunkten ergeben, sind in Fig. 4 durch Quadrate gekennzeichnet.

Die Lage der Bestimmungszeitpunkte innerhalb einer jeweiligen Periode des Stroms, also die Phasenlage der Bestimmungszeitpunkte, ändert sich somit für aufeinanderfolgende Perioden nach und nach. Beispielsweise können 19 Messungen durchgeführt worden sein, bis sich der Bestimmungszeitpunkt über eine vollständige Periode verschoben hat, d.h. es wurden an 19 Stellen des periodischen Verlaufs des Stromes Messungen durchgeführt. Eine Anzahl von mindestens neun Messungen an unterschiedlichen, gleichmäßig voneinander beabstandeten Stellen des periodischen Verlaufs des Stroms (und ebenso der Spannung) ist hierbei vorteilhaft, wobei eine Anzahl von mindestens 15 bevorzugt ist. Vorteilhafterweise liegt die Anzahl der Messungen unter 100. Damit bleibt die insgesamte Messdauer zur Bestimmung eines Leistungsfaktorwerts relativ kurz, sodass z.B. auch mehrere Erfassungen des Leistungsfaktorwertes im 100 Hz-Ripple möglich sind.

Durch die Abtastung des Stroms mit einer Abtastfrequenz, welche etwas geringer als die Frequenz des Schwingkreises ist, wird somit eine "heruntertransformierte Kurve" für den Strom erhalten, vgl. Fig. 5.

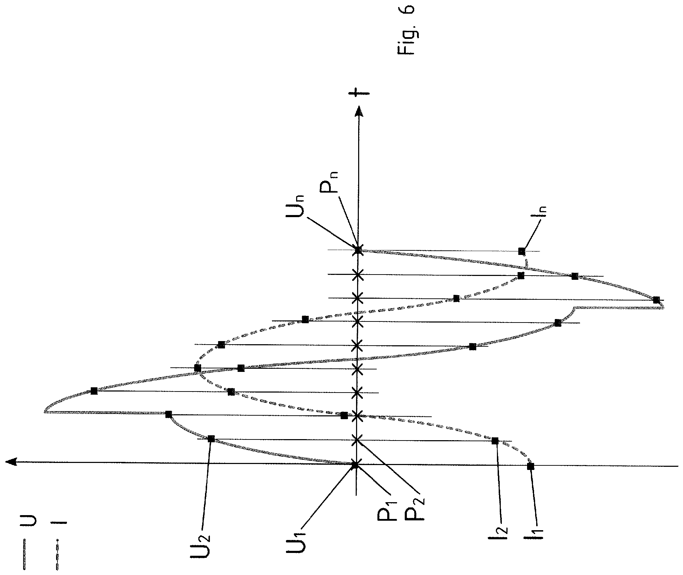

In Fig. 6 sind der Verlauf des vom Ausgang des Leistungsteils 5 ausgegebenen Stroms und der Verlauf der am Ausgang des Leistungsteils 5 anliegenden Spannung über eine heruntertransformierte Periode dargestellt (wobei der 100 Hz-Ripple vernachlässigt ist). Die Bestimmungszeitpunkte $P_1$, $P_2$, ..., $P_n$, an welchen die Momentanwerte des Stroms und der Spannung erfasst worden sind, sind ebenfalls eingezeichnet. Die zu den Bestimmungszeitpunkten vorliegenden Werte für den Strom ($I_1$, $I_2$, ..., $I_n$) und die Spannung ($U_1$, $U_2$, ..., $U_n$) sind durch Quadrate markiert.

Vom Steuerteil 6 wird zum jeweiligen Bestimmungszeitpunkt das Produkt des vorzeichenbehafteten Momentanwerts des Stroms und des vorzeichenbehafteten Momentanwerts der Spannung gebildet und diese Produkte werden für alle Bestimmungszeitpunkte, die in einer heruntertransformierten Periode des Stroms und der Spannung liegen, addiert. Als Ergebnis dieser Addition dividiert durch die Anzahl der Bestimmungszeitpunkte wird ein Wirkleistungswert P' erhalten, der zumindest näherungsweise der Wirkleistung P entspricht:

$$P' = \frac{1}{n}\sum_{i=1}^{n} U_i\, I_i$$

Die Division durch die Anzahl der Bestimmungszeitpunkte kann auch entfallen, womit ein der Wirkleistung zumindest näherungsweise proportionaler Wirkleistungswert P' erhalten wird (die Anzahl n der Bestimmungszeitpunkte bleibt ja konstant).

Im Weiteren kann aus den zu den Bestimmungszeitpunkten gemessenen Momentanwerten des Stroms und der Spannung ein der Scheinleistung S zumindest näherungsweise entsprechender Scheinleistungswert S' bestimmt werden, und zwar indem die quadratischen Mittelwerte für den Strom und die Spannung gebildet werden und diese miteinander multipliziert werden:

$$S' = \sqrt{\frac{1}{n}\sum_{i=1}^{n}U_i{}^2} \cdot \sqrt{\frac{1}{n}\sum_{i=1}^{n}I_i{}^2} = \frac{1}{n} \cdot \sqrt{\sum_{i=1}^{n}U_i{}^2 \cdot \sum_{i=1}^{n}I_i{}^2}$$

Die Division durch die Anzahl der Bestimmungszeitpunkte kann auch entfallen, womit ein der Scheinleistung zumindest näherungsweise proportionaler Scheinleistungswert S' erhalten wird.

Als Scheinleistungswert S' könnte anstelle des Produkts aus den Effektivwerten von Strom und Spannung auch das Produkt aus den bei der Abtastung gefundenen Maximalwerten für den Strom und die Spannung gebildet werden.

Anstelle einer Messung der Spannung am Ausgang des Leistungsteils könnte auch eine Steuerspannung des Steuerteils 6 gemessen werden (die "Zwischenkreis-Spannung") und aus dieser die Spannung am Ausgang des Leistungsteils 5 oder ein hierzu zumindest näherungsweise proportionaler Spannungswert berechnet werden, indem Zeitverzögerungen im Leistungsteil 5 berücksichtigt werden (z.B. Einschaltverzögerungen von elektronischen Schaltelementen).

Anstelle der zuvor beschriebenen Berechnung des Wirkleistungswerts mit einer Multiplikation der Momentanwerte von Strom und Spannung könnte auch eine stark genäherte Berechnung für den Wirkleistungswert durchgeführt werden, bei welcher die Verläufe des Stroms und der Spannung sinusförmig angesetzt werden. Es ist dann ausreichend, den im periodischen Kurvenverlauf des vom Leistungsteil ausgegebenen Stroms 6 vorliegenden Maximalwert und den im periodischen Kurvenverlauf der am Ausgang des Leistungsteils 5 anliegenden Spannung vorliegenden Maximalwert und die Phasenverschiebung zwischen dem vom Leistungsteil 5 ausgegebenen Strom und der vom Leistungsteil 5 ausgegebenen Spannung zu erfassen, sowie im Weiteren das Produkt aus dem Maximalwert des Stroms, den Maximalwert der Spannung und dem Kosinus der Phasenverschiebung zu bilden.

Nach Bestimmung des Wirkleistungswerts P' und des Scheinleistungswerts S' wird der Leistungsfaktorwert $\lambda$' bestimmt, indem der Betrag des Wirkleistungswertes durch den Scheinleistungswert dividiert wird. In Abhängigkeit vom so ermittelten Leistungsfaktorwert $\lambda$' erfolgt die Regelung oder Steuerung der Größe, von der die Scheinleistung der Induktionsspule 3 abhängt. Im Ausführungsbeispiel erfolgt also in Abhängigkeit vom ermittelten Leistungsfaktorwert $\lambda$' eine Regelung des Maximalwerts des vom Leistungsteil 5 ausgegebenen Stroms $I_{max}$.

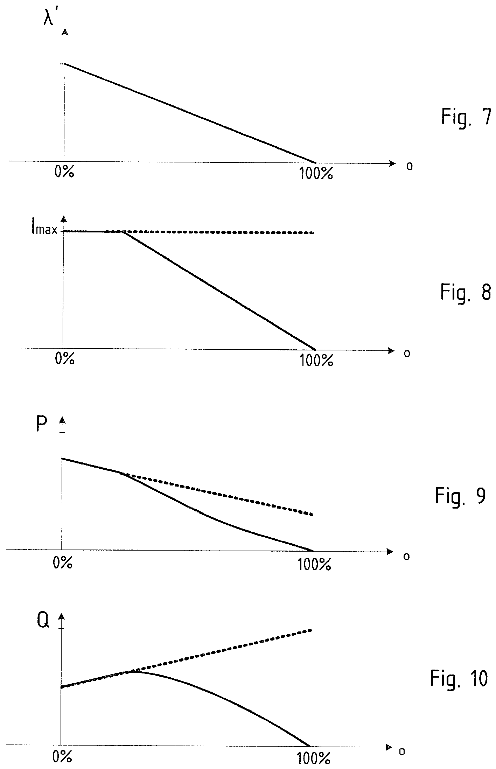

In Fig. 7 ist der Leistungsfaktorwert $\lambda$' in Abhängigkeit vom prozentuellen Anteil der offenen (= nicht überdeckten) Spulenfläche o dargestellt. Wenn die Induktionsspule 3 vollständig abgedeckt ist, also o = 0, so ist der Leistungsfaktorwert $\lambda$' maximal und liegt beispielsweise im Bereich von 0,5 bis 0,7. Mit zunehmend größerem Prozentsatz an offener Spulenfläche verringert sich der Leistungsfaktorwert $\lambda$'. In Fig. 7 ist diese Verringerung linear dargestellt, wie dies in der Praxis zumindest näherungsweise der Fall sein kann.

Wenn sich der Leistungsfaktorwert $\lambda$' ausgehend von seinem Maximalwert verringert, erfolgt im Ausführungsbeispiel bis zu einer bestimmten Größe (= einem bestimmten Grenzwert) des Leistungsfaktorwerts keine Verringerung des Maximalwerts des Stroms $I_{max}$ am Ausgang des Leistungsteils 5, vgl. Fig. 8. Erst bei einer weiteren Verringerung des Leistungsfaktorwerts $\lambda$' wird der Maximalwert des Stroms $I_{max}$ verringert, z.B. proportional zum Leistungsfaktorwert $\lambda$', wie dies in Fig. 8 dargestellt ist.

Die sich ergebende Wirkleistung P der Induktionsspule 3 ist in Fig. 9 dargestellt. Mit gestrichelter Linie ist zum Vergleich die Wirkleistung dargestellt, welche sich ohne Verringerung von $I_{max}$ bei sich verringerndem $\lambda$' ergibt (entsprechend der gestrichelten Linie für $I_{max}$ in Fig. 8).

In Fig. 10 ist im Weiteren die sich ergebende Blindleistung Q dargestellt. Es ist ersichtlich, dass bei sich verringerndem $\lambda$' die Blindleistung zunächst erhöht, bis zu dem Punkt, an welchem eine Verringerung von $I_{max}$ erfolgt. Die Blindleistung Q erhöht sich dann bei einer weiteren Vergrößerung des prozentuellen Anteils der offenen Spulenfläche nicht weiter sondern verringert sich vielmehr.

In Fig. 10 ist zum Vergleich mit gestrichelter Linie die Blindleistung eingetragen, welche sich ohne Verringerung von $I_{max}$ bei abnehmendem $\lambda$' ergibt. Es ist ersichtlich, dass die Blindleistung, und damit die abgestrahlte elektromagnetische Strahlung sich in diesem Fall bei sich verringerndem $\lambda$' stetig erhöht.

Andere Verläufe für den Wert, auf den $I_{max}$ bei abnehmendem $\lambda$' eingestellt wird, sind denkbar und möglich. So könnte beispielsweise $I_{max}$ auch bereits am Anfang der Verringerung von $\lambda$' (also ausgehend vom Maximalwert von $\lambda$' bei 0% offener Spulenfläche) verringert werden.

Beispielsweise könnte die Einstellung auch so durchgeführt werden, dass die Blindleistung bei sich vergrößernder offener Spulenfläche konstant bleibt (evtl. nach einem anfänglichen Anstieg).

Es kann auch eine Mittelung von mehreren erfassten Leistungsfaktorwerten durchgeführt werden, beispielsweise von mehreren innerhalb einer Periode des 100 Hz-Ripples (im Falle einer einphasigen Versorgungsspannung) durchgeführten Ermittlungen des Leistungsfaktorwerts. Eine solche Mittelung kann beispielsweise mittels einer Glättung (Filterung) der Größen von nacheinander ermittelten Leistungsfaktorwerten durchgeführt werden.

Im Falle einer einphasigen Versorgungsspannung werden also günstigerweise über eine halbe Periodendauer der Versorgungsspannung und im Falle einer dreiphasigen Versorgungsspannung über ein Sechstel der Periodendauer der Versorgungsspannung eine Mehrzahl von Ermittlungen des Leistungsfaktorwerts durchgeführt und es wird dann vorzugsweise ein Mittelwert des Leistungsfaktorwerts gebildet.

Wenn der Wirkleistungswert der Wirkleistung zumindest näherungsweise entspricht (und nicht nur zumindest näherungsweise proportional zu dieser ist), könnte für den Wirkleistungswert anstelle der Bezeichnung P' auch die Bezeichnung P verwendet werden. Analoges gilt für die Verwendung von S anstelle von S' und $\lambda$ anstelle von $\lambda$'.

Wenn zuvor davon die Rede war, dass ein Wert einer bestimmten Größe zumindest näherungsweise entspricht oder zumindest näherungsweise proportional zu dieser ist, so sollen hierbei vorzugsweise Abweichungen von bis zu 20% von dieser Größe bzw. von bis zu 20% von der Proportionalität mit dieser Größe erfasst sein.

Legende

zu den Hinweisziffern:

1 Kochfeldplatte
2 Topf
3 Induktionsspule
4 Generator
5 Leistungsteil
6 Steuerteil
7 Bedieneinheit
8 Bedienelement
9 elektrische Steckverbindung
10 Kabel
11 Stromsensor
12 Leitung

**Patentansprüche**

1. Verfahren zum Betreiben einer Induktionsheizvorrichtung für ein Induktionskochfeld, mit einer Induktionsspule (3) und einem Generator (4), der ein Leistungsteil (5), welches mit der Induktionsspule (3) einen Schwingkreis bildet, und ein Steuerteil (6) aufweist, wobei vom Steuerteil (6) in Abhängigkeit von einer eingestellten Kochstufe eine Größe gesteuert oder geregelt wird, von der die Scheinleistung (S) der Induktionsspule abhängt, **dadurch gekennzeichnet, dass** vom Steuerteil ein Leistungsfaktorwert ($\lambda$') bestimmt wird, der dem Leistungsfaktor ($\lambda$) der Induktionsspule (3) zumindest näherungsweise entspricht oder zu diesem zumindest näherungsweise proportional ist und die Größe, von der die Scheinleistung (S) der Induktionsspule abhängt, vom Steuerteil (6) in Abhängigkeit von diesem vom Steuerteil (6) bestimmten Leistungsfaktorwert ($\lambda$') geregelt oder gesteuert wird, wobei für eine bestimmte eingestellte Kochstufe bei einem kleineren Leistungsfaktorwert ($\lambda$') die Größe, von der die Scheinleistung (S) der Induktionsspule (3) abhängt, so eingestellt wird, dass die Scheinleistung (S) der Induktionsspule (3) kleiner ist als bei einem größeren Leistungsfaktorwert ($\lambda$').

2. Verfahren nach Anspruch 1, **dadurch gekennzeichnet, dass** die vom Steuerteil (6) gesteuerte oder geregelte Größe, von der die Scheinleistung (S) der Induktionsspule (3) abhängt, der Maximalwert oder Effektivwert des vom Ausgang des Leistungsteil (5) ausgegebenen Stroms oder der am Ausgang des Leistungsteils (5) anliegenden Spannung ist.

3. Verfahren nach Anspruch 1, **dadurch gekennzeichnet, dass** das Steuerteil (6) einen Pulsgenerator aufweist und der Maximalwert des vom Ausgang des Leistungsteils (5) ausgegebenen Stroms oder der am Ausgang des Leistungsteils (5) anliegenden Spannung von der Pulsdauer der Pulse des Pulsgenerators abhängt und die vom Steuerteil (6) gesteuerte oder geregelte Größe, von der die Scheinleistung (S) der Induktionsspule (3) abhängt, die Pulsdauer ist, oder dass das Steuerteil (6) einen Frequenzgenerator aufweist und der Maximalwert des vom Ausgang des Leistungsteils (5) ausgegebenen Stroms oder der am Ausgang des Leistungsteils (5) anliegenden Spannung von der Frequenz des Frequenzgenerators abhängt und die vom Steuerteil (6) gesteuerte oder geregelte Größe, von der die Scheinleistung (S) der Induktionsspule (3) abhängt, die Frequenz des Frequenzgenerators ist.

4. Verfahren nach einem der Ansprüche 1 bis 3, **dadurch gekennzeichnet, dass** zur Bestimmung des Leistungsfaktorwerts ($\lambda$') ein der Wirkleistung der Induktionsspule (3) zumindest näherungsweise entsprechender oder zu dieser zumindest näherungsweise proportionaler Wirkleistungswert bestimmt wird und im Weiteren ein der Scheinleistung (S) der Induktionsspule (3) zumindest näherungsweise entsprechender oder zu dieser zumindest näherungsweise proportionaler Scheinleistungswert bestimmt wird und im Weiteren der Betrag des Wirkleistungswertes durch den Scheinleistungswert dividiert wird.

5. Verfahren nach Anspruch 4, **dadurch gekennzeichnet, dass** der Wirkleistungswert bestimmt wird, indem zu einer Mehrzahl von Bestimmungszeitpunkten ($P_1$, $P_2$, ..., $P_n$), die gleichmäßig verteilte Phasenlagen im periodischen Kurvenverlauf des vom Ausgang des Leistungsteils (5) ausgegebenen Stroms und im periodischen Kurvenverlauf der am Ausgang des Leistungsteils (5) anliegenden Spannung aufweisen, jeweils das Produkt der Momentanwerte des Stroms ($I_1$, $I_2$, ..., $I_n$) und der Spannung ($U_1$, $U_2$, ..., $U_n$) gebildet wird und die so erhaltenen Produkte addiert werden.

6. Verfahren nach Anspruch 5, **dadurch gekennzeichnet, dass** die Momentanwerte des Stroms und der Spannung zu den Bestimmungzeitpunkten durch eine Abtastung des Stroms und der Spannung mit einer Abtastfrequenz, welche geringer als die Frequenz des Schwingkreises ist, erhalten werden.

7. Verfahren nach Anspruch 6, **dadurch gekennzeichnet, dass** die Abtastfrequenz so gewählt wird, dass sich im periodischen Kurvenverlauf des Stroms und der Spannung zumindest zehn, vorzugsweise zumindest 15, Bestimmungszeitpunkte ergeben.

8. Verfahren nach Anspruch 4, **dadurch gekennzeichnet, dass** der Wirkleistungswert (P') bestimmt wird, indem das Produkt aus dem im periodischen Kurvenverlauf vorliegenden Maximalwert des vom Ausgang des Leistungsteils (5) ausgegebenen Stroms, dem im periodischen Kurvenverlauf vorliegenden Maximalwert der am Ausgang des Leistungsteils (5) anliegenden Spannung und dem Kosinus der Phasenverschiebung zwischen dem Strom und der Spannung gebildet wird oder indem das Produkt aus dem Effektivwert des Stroms, dem Effektivwert der Spannung und dem Kosinus der Phasenverschiebung zwischen dem Strom und der Spannung gebildet wird.

9. Verfahren nach einem der Ansprüche 4 bis 8, **dadurch gekennzeichnet, dass** der Scheinleistungswert (S') durch Multiplikation des im periodischen Kurvenverlauf vorliegenden Maximalwertes des Stroms mit dem im periodischen Kurvenverlauf vorliegenden Maximalwert der Spannung oder durch Multiplikation des Effektivwerts des Stroms mit dem Effektivwert der Spannung bestimmt wird.

10. Verfahren nach einem der Ansprüche 4 bis 9, **dadurch gekennzeichnet, dass** bei einer einphasigen Versorgungsspannung der Induktionsheizvorrichtung über eine halbe Periodendauer oder bei dreiphasiger Versorgungsspannung über ein Sechstel der Periodendauer der Versorgungsspannung eine Mehrzahl von Ermittlungen des Leistungsfaktorwerts ($\lambda$') durchgeführt wird und in zwei oder mehr aufeinanderfolgenden Ermittlungen erhaltene Leistungsfaktorwerte ($\lambda$') gemittelt werden.

11. Verfahren nach einem der Ansprüche 1 bis 10, **dadurch gekennzeichnet, dass** bei einer fortlaufenden Verringerung des Leistungsfaktorwerts ($\lambda$') zumindest ab Unterschreiten eines Grenzwertes des Leistungsfaktorwerts ($\lambda$') die Größe, von der die Scheinleistung (S) der Induktionsspule abhängt, derart gesteuert oder geregelt wird, dass die Blindleistung (Q) bei einer weiteren Verringerung des Leistungsfaktorwerts ($\lambda$') konstant bleibt oder kleiner wird.

**Claims**

1. Method for operating an induction heater for an induction hob, with an induction coil (3) and a generator (4) which has a power unit (5), which forms an oscillating circuit with the induction coil (3), and a control unit (6), wherein a variable is controlled or regulated by the control unit (6) depending on a selected heat setting, the apparent power (S) of the induction coil depending on said variable, **characterised in that** a power factor value ($\lambda$') is determined by the control unit which corresponds at least approximately to the power factor ($\lambda$) of the induction coil (3) or is at least approximately proportional thereto, and the variable on which the apparent power (S) of the induction coil depends is regulated or controlled by the control unit (6) depending on this power factor value (λ') determined by the control unit (6), wherein, for a particular selected heat setting, with a lower power factor value (λ') the variable on which the apparent power (S) of the induction coil (3) depends is adjusted such that the apparent power (S) of the induction coil (3) is less than with a higher power factor value (λ').

2. Method according to claim 1, **characterised in that** the variable which is controlled or regulated by the control unit (6) and on which the apparent power (S) of the induction coil (3) depends is the maximum value or effective value of the current output by the output of the power unit (5) or the voltage present at the output of the power unit (5).

3. Method according to claim 1, **characterised in that** the control unit (6) has a pulse generator and the maximum value of the current output by the output of the power unit (5) or the voltage present at the output of the power unit (5) depends on the pulse duration of the pulses of the pulse generator and the variable which is controlled or regulated by the control unit (6) and on which the apparent power (S) of the induction coil (3) depends is the pulse duration, or that the control unit (6) has a frequency generator and the maximum value of the current output by the output of the power unit (5) or the voltage present at the output of the power unit (5) depends on the frequency of the frequency generator and the variable which is controlled or regulated by the control unit (6) and on which the apparent power (S) of the induction coil (3) depends is the frequency of the frequency generator.

4. Method according to one of the claims 1 to 3, **characterised in that** in order to determine the power factor value (A') an active power value which corresponds at least approximately to the power factor of the induction coil (3) or is at least approximately proportional thereto is determined and then an apparent power value which corresponds at least approximately to the apparent power (S) of the induction coil (3) or is at least approximately proportional thereto is determined and then the amount of the active power value is divided by the apparent power value.

5. Method according to claim 4, **characterised in that** the active power value is determined **in that**, at a predetermined number of determination times ($P_1$, $P_2$, ..., $P_n$) which exhibit evenly distributed phase positions in the periodic curve progression of the current output by the output of the power unit (5) and in the periodic curve progression of the voltage present at the output of the power unit (5), in each case the product of the instantaneous values of the current ($I_1$, $I_2$, ..., $I_n$) and the voltage ($U_1$, $U_2$, ... , $U_n$) is formed and the products thus obtained are added.

6. Method according to claim 5, **characterised in that** the instantaneous values of the current and the voltage at the determination times are obtained through a sampling of the current and the voltage with a sampling frequency which is less than the frequency of the oscillating circuit.

7. Method according to claim 6, **characterised in that** the sampling frequency is selected such that at least ten, preferably at least 15, determination times occur in the periodic curve progression of the current and the voltage.

8. Method according to claim 4, **characterised in that** the active power value (P') is determined **in that** the product of the maximum value, in the periodic curve progression, of the current output by the output of the power unit (5), the maximum value, in the periodic curve progression, of the voltage present at the output of the power unit (5) and the cosine of the phase shift between the current and the voltage is formed, or **in that** the product of the effective value of the current, the effective value of the voltage and the cosine of the phase shift between the current and the voltage is formed.

9. Method according to one of the claims 4 to 8, **characterised in that** the apparent power value (S') is determined through multiplication of the maximum value of the current in the periodic curve progression by the maximum value of the voltage in the periodic curve progression or through multiplication of the effective value of the current by the effective value of the voltage.

10. Method according to one of the claims 4 to 9, **characterised in that** a plurality of determinations of the power factor value (λ') is carried out, with a single-phase supply voltage to the induction heater over half a period duration, or with a three-phase supply voltage over a sixth of the period duration of the supply voltage, and power factor values (A') obtained in two or more consecutive determinations are averaged.

11. Method according to one of the claims 1 to 10, **characterised in that**, with a continuing reduction in the power factor value (λ'), at least on falling below a limit value for the power factor value (A'), the variable on which the apparent power (S) of the induction coil depends is controlled or regulated such that the reactive power (Q) remains constant or becomes smaller on a further reduction in the power factor value (λ').

**Revendications**

1. Procédé de fonctionnement d'un dispositif de chauffage par induction pour une table de cuisson à induction comprenant une bobine d'induction (3) et un générateur (4) qui présente un bloc d'alimentation (5) formant un circuit oscillant avec la bobine d'induction (3), et une partie de commande (6), la partie de commande (6) commandant ou régulant en fonction d'une puissance de cuisson choisie une grandeur dont dépend la puissance apparente (S) de la bobine d'induction, **caractérisé en ce que** la partie de commande détermine une valeur du facteur de puissance ($\lambda$') qui correspond au moins approximativement au facteur de puissance ($\lambda$) de la bobine d'induction (3) ou lui est au moins approximativement proportionnelle, et la partie de commande (6) régule ou commande la grandeur dont dépend la puissance apparente (S) de la bobine d'induction en fonction de cette valeur du facteur de puissance ($\lambda$') déterminée par la partie de commande (6), la grandeur dont dépend la puissance apparente (S) de la bobine d'induction (3) étant réglée de telle sorte que pour une certaine puissance de cuisson choisie la puissance apparente (S) de la bobine d'induction (3) est inférieure pour une faible valeur du facteur de puissance ($\lambda$') que pour une valeur du facteur de puissance ($\lambda$') plus élevée.

2. Procédé selon la revendication 1, **caractérisé en ce que** la grandeur commandée ou régulée par la partie de commande (6) et dont dépend la puissance apparente (S) de la bobine d'induction (3), est la valeur maximale ou la valeur effective du courant délivré à la sortie du bloc d'alimentation (5) ou de la tension présente à la sortie du bloc d'alimentation (5).

3. Procédé selon la revendication 1, **caractérisé en ce que** la partie de commande (6) comporte un générateur d'impulsions et la valeur maximale du courant délivré à la sortie du bloc d'alimentation (5) ou de la tension appliquée à la sortie du bloc d'alimentation (5) dépend de la durée d'impulsion des impulsions du générateur d'impulsions, et la grandeur contrôlée ou régulée par la partie de commande (6) et dont dépend la puissance apparente (S) de la bobine à induction (3), est la durée d'impulsion, ou **en ce que** la partie de commande (6) comporte un générateur de fréquence et la valeur maximale du courant délivré à la sortie du bloc d'alimentation (5) ou de la tension appliquée à la sortie du bloc d'alimentation (5) dépend de la fréquence du générateur de fréquence, et la grandeur commandée ou régulée par la partie de commande (6) et dont dépend la puissance apparente (S) de la bobine d'induction (3), est la fréquence du générateur de fréquence.

4. Procédé selon l'une des revendications 1 à 3, **caractérisé en ce qu'**une valeur de puissance active qui correspond au moins approximativement à la puissance active de la bobine d'induction (3), ou qui lui est au moins approximativement proportionnelle, est déterminée pour déterminer la valeur du facteur de puissance ($\lambda$'), puis une valeur de puissance apparente qui correspond au moins approximativement à la puissance apparente (S) de la bobine d'induction (3), ou qui lui est au moins approximativement proportionnelle, est déterminée, puis la mesure de la valeur de la puissance active est divisée par la valeur de puissance apparente.

5. Procédé selon la revendication 4, **caractérisé en ce que** la valeur de puissance active est déterminée en formant pour chacun d'une pluralité de moments de détermination ($P_1$, $P_2$, ..., $P_n$) qui présentent des positions de phase uniformément réparties dans la courbe périodique du courant délivré à la sortie du bloc d'alimentation (5) et dans la courbe périodique de la tension appliquée à la sortie du bloc d'alimentation (5), le produit des valeurs instantanées du courant ($I_1$, $I_2$, ..., $I_n$) et de la tension ($U_1$, $U_2$, ..., $U_n$), et les produits ainsi obtenus sont additionnés.

6. Procédé selon la revendication 5, **caractérisé en ce que** les valeurs instantanées du courant et de la tension aux moments de détermination sont obtenues par balayage du courant et de la tension à une fréquence de balayage inférieure à la fréquence du circuit oscillant.

7. Procédé selon la revendication 6, **caractérisé en ce que** la fréquence de balayage est choisie de telle sorte qu'il en résulte au moins dix, de préférence au moins 15, moments de détermination dans la courbe périodique du courant et de la tension.

8. Procédé selon la revendication 4, **caractérisé en ce que** la valeur de puissance active (P') est déterminée en formant le produit de la valeur maximale présente dans la courbe périodique du courant délivré à la sortie du bloc d'alimentation (5), de la valeur maximale présente dans la courbe périodique de la tension appliquée à la sortie du bloc d'alimentation (5) et du cosinus du déphasage entre le courant et la tension, ou en formant le produit de la valeur effective du courant, de la valeur effective de la tension et du cosinus du déphasage entre le courant et la tension.

**9.** Procédé selon l'une des revendications 4 à 8, **caractérisé en ce que** la valeur de la puissance apparente (S') est déterminée en multipliant la valeur maximale du courant présente dans la courbe périodique par la valeur maximale de la tension présente dans la courbe périodique, ou en multipliant la valeur effective du courant par la valeur effective de la tension.

**10.** Procédé selon l'une des revendications 4 à 9, **caractérisé en ce qu'**une pluralité de déterminations de la valeur du facteur de puissance ($\lambda$') sont effectuées sur une demi-période de la tension d'alimentation dans le cas d'une tension d'alimentation monophasée du dispositif de chauffage par induction, ou sur un sixième de la période dans le cas d'une tension d'alimentation triphasée, et la moyenne des valeurs du facteur de puissance ($\lambda$') obtenues dans deux déterminations successives ou plus est calculée.

**11.** Procédé selon l'une des revendications 1 à 10, **caractérisé en ce que,** dans le cas d'une réduction continue de la valeur du facteur de puissance ($\lambda$'), au moins dès que la valeur du facteur de puissance ($\lambda$') devient inférieure à une valeur limite, la grandeur dont dépend la puissance apparente (S) de la bobine d'induction est commandée ou régulée de telle sorte que, en cas de poursuite de la réduction de la valeur du facteur de puissance ($\lambda$'), la puissance réactive (Q) reste constante ou diminue.

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2087770 B1
- US 20130284723 A1
- EP 1414276 A1
- JP 2009272152 A
- EP 1978786 A1
- DE 102010002655 A1